(19) Europäisches Patentamt
European Patent Office
Office européen des brevets

(11) **EP 4 080 161 B1**

(12) **EUROPÄISCHE PATENTSCHRIFT**

(45) Veröffentlichungstag und Bekanntmachung des Hinweises auf die Patenterteilung:
**31.07.2024  Patentblatt 2024/31**

(21) Anmeldenummer: **21169239.7**

(22) Anmeldetag: **19.04.2021**

(51) Internationale Patentklassifikation (IPC):
**G01B 11/25** (2006.01)  **G01B 11/26** (2006.01)
**G01B 21/04** (2006.01)

(52) Gemeinsame Patentklassifikation (CPC):
**G01B 11/2513; G01B 11/2504; G01B 11/26; G01B 21/045**

(54) **VERFAHREN UND ANORDNUNG ZUR KOMPENSATION VON STRAHLWINKELÄNDERUNGEN EINES DURCH EIN DIFFRAKTIVES OPTISCHES ELEMENT ERZEUGTEN STRAHLENBÜNDELS**

METHOD AND DEVICE FOR COMPENSATING FOR BEAM ANGLE VARIATIONS OF BEAMS PRODUCED BY A DIFFRACTIVE OPTICAL ELEMENT

PROCÉDÉ ET AGENCEMENT DE COMPENSATION DES CHANGEMENTS D'ANGLE DE FAISCEAU DANS UN FAISCEAU GÉNÉRÉ PAR UN ÉLÉMENT OPTIQUE À DIFFRACTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.10.2022  Patentblatt 2022/43**

(73) Patentinhaber: **VITRONIC Dr.-Ing. Stein Bildverarbeitungssysteme GmbH**
**65189 Wiesbaden (DE)**

(72) Erfinder:
• **OTT, Konstantin**
  **65197 Wiesbaden (DE)**
• **HOFFMANN, Burghardt**
  **65232 Taunusstein (DE)**

(74) Vertreter: **Neumann Müller Oberwalleney Patentanwälte PartG mbB**
**Overstolzenstraße 2a**
**50677 Köln (DE)**

(56) Entgegenhaltungen:
**CN-A- 108 711 167**      **DE-B4- 102014 019 671**
**US-A1- 2018 061 056**    **US-A1- 2020 242 792**

**Beschreibung**

Die Anmeldung betrifft ein Verfahren zur Kompensation von Strahlwinkeländerungen eines durch ein diffraktives optisches Element erzeugten Strahlenbündels von Laserstrahlen mit jeweiligen Strahlwinkeln. Die Anmeldung betrifft weiterhin eine Anordnung zur Kompensation von Strahlwinkeländerungen eines durch ein diffraktives optisches Element erzeugten Strahlenbündels von Laserstrahlen mit jeweiligen Strahlwinkeln.

In Anwendungen, bei denen eine hochgenaue Kenntnis der Strahlwinkel benötigt wird, kann die Wellenlänge des Laserlichts beispielsweise durch eine Regelung stabilisiert werden. Die US 4 737 798 A offenbart ein Verfahren zum Verhindern von Modensprüngen bei Laserdioden, bei dem ein stabiler Betriebstemperaturbereich der Laserdiode identifiziert wird, indem der Diodenvorspannungsstrom bis auf einen vorbestimmten Wert reduziert wird, wodurch ein erstes Diodentemperaturniveau erreicht wird, bei dem sich ein Modensprung ereignet, und anschließend der Diodenmodulationsstrom bis einen vorbestimmten Wert erhöht wird, wodurch ein zweites Diodentemperaturniveau erreicht wird, bei dem sich ein Modensprung ereignet. Die Diodenvorspannungs- und Modulationsströme werden beim Betrieb der Diode überwacht, wobei die Diode bei Erreichen des vorbestimmten Diodenvorspannungsstroms beheizt wird, um die Diodentemperatur zu erhöhen und zu verhindern, dass die Diode das erste Temperaturniveau erreicht. Dadurch wird verhindert, dass die Diode einen Modensprung vollzieht. Entsprechend wird die Diode bei Erreichen des vorbestimmten Diodenmodulationsstroms gekühlt, um die Diodentemperatur zu senken und zu verhindern, dass die Diode bei dem zweiten Temperaturniveau einen Modensprung vollzieht.

Eine Aufgabe kann darin bestehen, eine vereinfachte Anordnung und ein Verfahren ohne eine rückkoppelnde Regelung des Laserlichts zu schaffen.

Gemäß Anspruch 1 wird ein Verfahren zur Kompensation von Strahlwinkeländerungen eines durch ein diffraktives optisches Element erzeugten Strahlenbündels von Laserstrahlen mit jeweiligen Strahlwinkeln vorgeschlagen.

Die Strahlwinkeländerung jedes durch das diffraktive optische Element abgelenkten Laserstrahls des Strahlenbündels steht in Relation zu der zugrundeliegenden Wellenlängenänderung des emittierten Laserlichts. Indem die erste Teilmenge der Laserstrahlen dazu verwendet wird, den Strahlwinkelwert zu ermitteln, ist die Strahlwinkeländerung aller erzeugten Strahlen nachvollziehbar und kann vorteilhaft bei der gleichzeitig oder zeitversetzt erfolgenden Auswertung des erfassten Lichtmusters der zweiten Teilmenge der Laserstrahlen genutzt werden, um diese zu kompensieren. Der ermittelte Strahlwinkelwert wird nicht in die Laserelektronik rückgekoppelt, sondern beispielsweise einer Verarbeitungsvorrichtung zum Auswerten des Lichtmusters mit einer entsprechenden Software übergeben, welche zur Auswertung des Lichtmusters gewünschte Berechnungen, wie z. B. für eine Lasertriangulation, unter Berücksichtigung der Strahlwinkeländerungen der Strahlwinkel der zweiten Teilmenge der Laserstrahlen anhand des ermittelten Strahlwinkelwerts ausführt.

Soweit im Rahmen dieser Offenbarung auf Laserstrahlen bzw. Laserdioden eingegangen wird, erkennt der Fachmann, dass die hier vorgestellten Lösungen und Ausführungsformen bei jeglicher Art von kohärenter Strahlung bzw. kohärenten Lichtquellen Anwendung finden können, so dass der Begriff Laserstrahlung synonym zu kohärenter Strahlung zu verstehen ist. Diffraktive optische Elemente (DOE) im Sinne der Offenbarung können verwendet werden, um eine Vielzahl von Laserstrahlen unter Verwendung von nur eines Laserstrahls aus einer Laserquelle zu erzeugen. Das Laserlicht eines Laserstrahls wird durch Interferenz in definierte Strahlwinkel abgelenkt, sodass aus einem Laserstrahl komplexe Muster oder Strahlbündel erzeugt werden können. Die Interferenz kohärenter Strahlung, beispielsweise des Laserlichts ist wellenlängenabhängig, wodurch auch die resultierenden Strahlwinkel der erzeugten Laserstrahlen und somit das gesamte Muster wellenlängenabhängig sind. Gängige Laserdioden und andere kohärente Strahlquellen emittieren in der Regel kein Laserlicht mit konstanter Wellenlänge, da Änderungen von Parametern, wie dem Diodenstrom und der Diodentemperatur der Laserdioden die emittierte Wellenlänge des Lichts beeinflussen. Neben einer stetigen Temperaturdrift können instantane Modensprünge auftreten. Änderungen der Wellenlänge des Laserlichts führen bei den durch das diffraktive optische Element abgelenkten Laserstrahlen zu Strahlwinkeländerungen, die vorteilhaft durch das beschriebene Verfahren kompensiert werden können. Als Spezialfall eines einfachen DOE kann ein optisches Gitter, beispielsweise ein Strichgitter oder eine Spaltanordnung, mit dem Verfahren verwendet werden.

Gemäß einer Ausführungsform wird zum Auswerten des Lichtmusters ein Datensatz, beispielsweise eine sogenannte Look-up Tabelle mit Daten verwendet, wobei die Daten des Datensatzes in Abhängigkeit von dem ermittelten Strahlwinkelwert angepasst werden. Bei einer Abweichung des ermittelten Strahlwinkelwerts von einem Referenzwert können die Daten des Datensatzes beispielsweise in Abhängigkeit von einer Differenz zwischen dem Referenzwert und dem ermittelten Strahlwinkelwert angepasst werden. Die Daten des Datensatzes können den Referenzwert sowie eine Zuordnung von Strahlpositionen und Strahlwinkel zu den jeweiligen Laserstrahlen, also deren Ortsvektoren und der Richtungsvektoren der Strahlen betreffen, die beispielsweise in einem vorhergehenden Kalibrierungsschritt aufgenommen werden können. Alternativ kann das erfasste Lichtmuster unter Berücksichtigung des ermittelten Strahlwinkelwerts zunächst zu einem korrigierten Lichtmuster verändert werden und anschließend das korrigierte Lichtmuster ohne weitere Kompensation ausgewertet werden.

Der Strahlwinkelwert wird aus mindestens einem Strahlwinkel eines der Laserstrahlen der ersten Teilmenge der Laserstrahlen ermittelt. Bei nur einem Laserstrahl entspricht der Strahlwinkelwert dem Strahlwinkel. Bei mehreren Laserstrahlen der ersten Teilmenge der Laserstrahlen kann der Strahlwinkelwert in geeigneter Weise aus mehreren Strahlwinkeln gebildet werden, beispielsweise als Mittelwert. Gemäß einer Ausführungsform kann der Strahlwinkelwert ermittelt werden, indem der Strahlwinkel mindestens eines Laserstrahls der ersten Teilmenge mit mindestens einem optischen Positionssensor detektiert wird. Gegebenenfalls können mehrere optische Positionssensoren verwendet werden. Ebenso können die Strahlwinkel mehrerer Laserstrahlen mit einem optischen Positionssensor erfasst werden. Die erste Teilmenge der Laserstrahlen wird beispielsweise derart ausgewählt, dass mindestens ein Laserstrahl der ersten Teilmenge in einer ersten von zwei Raumrichtungen bei einer Wellenlängenänderung des Laserstrahls eine wesentlich größere Änderung des Strahlwinkels erfährt als in der zweiten der zwei Raumrichtungen. Dadurch erfolgt die Änderung des Strahlwinkels quasi eindimensional, was dessen Bestimmung vorteilhaft erleichtert. Eine Änderung des Strahlwinkels in der zweiten Raumrichtung, orthogonal zur ersten Raumrichtung kann toleriert werden, soweit der Laserstrahl noch von dem Positionssensor erfassbar ist. Bei Verwendung zweidimensionaler Sensoren, z. B. Matrix-Sensoren kann die erste Teilmenge der Laserstrahlen auch beliebig gewählt werden, da die Änderungen des Strahlwinkels des mindestens einen Laserstrahls der ersten Teilmenge in den zwei Raumrichtungen bei einer Wellenlängenänderung erfasst wird.

Gemäß einer weiteren Ausführungsform wird der Strahlwinkelwert anhand von zwei Laserstrahlgruppen der ersten Teilmenge ermittelt, wobei die Strahlwinkel der Laserstrahlen der zwei Laserstrahlgruppen mit zwei räumlich getrennten optischen Positionssensoren detektiert werden. Dies kann vorteilhaft sein, da dadurch zusätzlich Effekte, wie z.B. Beampointing, detektiert werden können. Die erste Teilmenge kann mehr als einen Laserstrahl umfassen, wobei mindestens zwei der Laserstrahlen in einer Raumrichtung denselben Strahlwinkel aufweisen und durch ein und denselben optischen Positionssensor detektiert werden. Die Laserstrahlen jeder der zwei Laserstrahlgruppen können vorteilhaft jeweils in einer Raumrichtung denselben Strahlwinkel aufweisen und durch ein und denselben optischen Positionssensor detektiert werden. Die erste Teilmenge der Laserstrahlen kann mittels einer Umlenkvorrichtung, oder mehreren Umlenkvorrichtungen, auf den mindestens einen optischen Positionssensor gerichtet werden.

Gemäß Anspruch 10 wird eine Anordnung zur Kompensation von Strahlwinkeländerungen eines durch ein diffraktives optisches Element erzeugten Strahlenbündels von Laserstrahlen mit jeweiligen Strahlwinkeln vorgeschlagen.

Die Anordnung kann zur Kompensation von Strahlwinkeländerungen eines durch ein diffraktives optisches Element erzeugten Strahlenbündels von Laserstrahlen mit jeweiligen Strahlwinkeln nach dem zuvor beschriebenen Verfahren verwendet werden. Die Merkmale des Verfahrens sind sinngemäß auf die Anordnung anwendbar und umgekehrt.

Nach einer Ausführungsform weist die erste Sensoranordnung mindestens einen optischen Positionssensor auf, insbesondere mindestens einen positionsempfindlichen Detektor (Position Sensitive Detector, PSD), der ein- oder zweidimensional die Position eines Lichtpunktes messen kann. Beispielsweise weist die erste Sensoranordnung zwei räumlich getrennte optische Positionssensoren auf, insbesondere zwei positionsempfindliche Detektoren. Der mindestens eine optische Positionssensor kann räumlich derart positioniert sein, dass jeder von dem optischen Positionssensor erfasste Laserstrahl der ersten Teilmenge in einer ersten von zwei Raumrichtungen bei einer Wellenlängenänderung des Laserstrahls eine wesentlich größere Änderung des Strahlwinkels erfährt als in der zweiten der zwei Raumrichtungen, so dass vorteilhaft eine eindimensionale Erfassung des Lichtpunkts ausreichend ist. Eine Umlenkvorrichtung kann zum Umlenken der Laserstrahlen der ersten Teilmenge in Richtung der ersten Sensoranordnung vorgesehen sein.

Die zweite Sensoranordnung kann mit optischen Positionssensoren oder anderen optischen Sensoren ausgerüstet sein, welche das projizierte Lichtmuster erfassen oder ein Abbild des Lichtmusters aufnehmen. Die Verarbeitungsvorrichtung zum Auswerten des Lichtmusters kann ein Computer mit einem Datenträger sein, auf dem eine Software zum Auswerten des Lichtmusters unter Berücksichtigung der Strahlwinkeländerungen der Strahlwinkel der zweiten Teilmenge der Laserstrahlen ausgeführt wird.

Ein weiterer Aspekt der Anmeldung betrifft eine Verwendung gemäß Anspruch 15 der zuvor beschriebenen Anordnung zur Lasertriangulation, wobei ein Eingangslaserstrahl durch ein diffraktives optisches Element zu einem Strahlenbündel von Laserstrahlen mit jeweiligen Strahlwinkeln aufgefächert wird und die Strahlwinkeländerung mit dem zuvor beschriebenen Verfahren kompensiert wird.

Anhand von Ausführungsbeispielen werden nachfolgend das Verfahren und die Anordnung mit Bezug auf die beigefügten Zeichnungen erläutert. In den Figuren zeigt

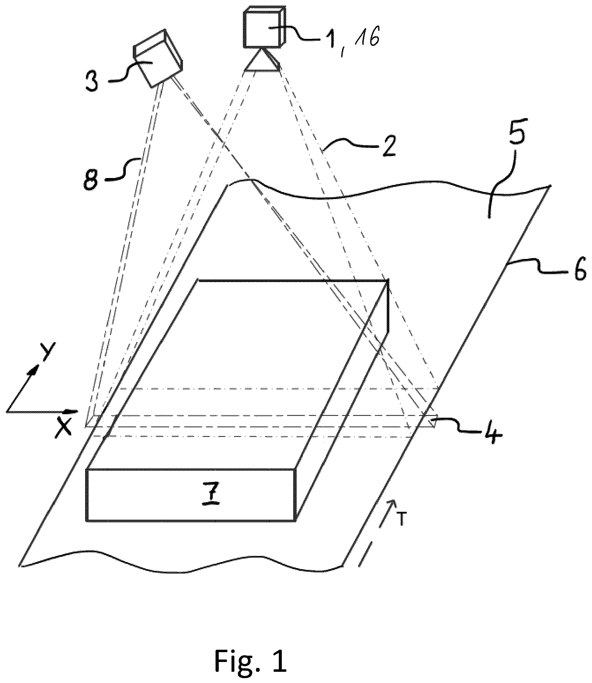

Figur 1 eine Vermessungsanordnung zur dreidimensionalen Vermessung von Objekten als Anwendungsbeispiel eines Verfahrens zur Kompensation von Strahlwinkeländerungen eines durch ein diffraktives optisches Element erzeugten Strahlenbündels von Laserstrahlen;

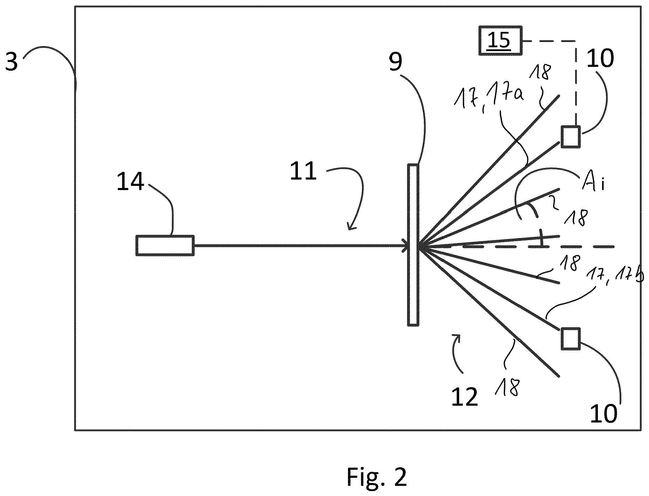

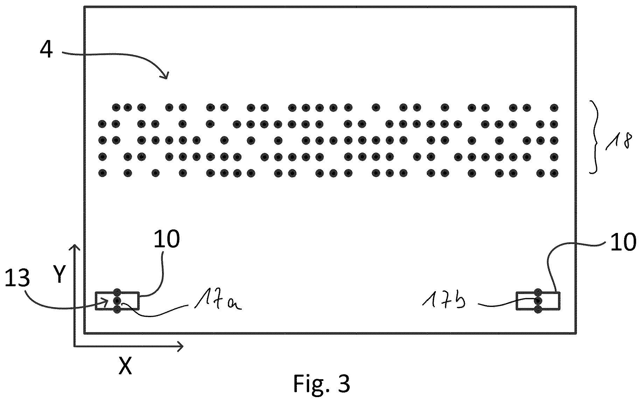

Figur 2 eine schematische Darstellung einer Anordnung zur Kompensation von Strahlwinkeländerungen eines durch ein diffraktives optisches Element erzeugten Strahlenbündels von Laserstrahlen; und Figur 3 eine nach dem Verfahren erzeugte erste Teilmenge der Laserstrahlen zum Ermitteln eines Strahlwinkelwerts und ein nach dem Verfahren projiziertes Lichtmuster einer zweiten Teilmenge der Laserstrahlen gemäß Figur 2.

Die Figur 1 zeigt in einer perspektivischen schematischen Darstellung eine Vermessungsanordnung zur dreidimensionalen Vermessung von Objekten 7, beispielsweise durch Dekodieren eines durch ein Lichtmuster 4 definierten Codeworts, welches zum Messen einer Höhe und eines Höhenverlaufs des Objekts 7 verwendet werden kann. Die Vorrichtung, welche in der europäischen Patentanmeldung Nr. 20180153.7 näher beschrieben ist, dient als Anwendungsbeispiel eines Verfahrens zur Kompensation von Strahlwinkeländerungen eines durch ein diffraktives optisches Element 9 erzeugten Strahlenbündels 12 von Laserstrahlen, vgl. Figur 2. Das Verfahren umfasst die Schritte:

- Ermitteln eines Strahlwinkelwerts aus mindestens einem Strahlwinkel Ai einer ersten Teilmenge 17 der Laserstrahlen,
- Erfassen des mit einer zweiten Teilmenge 18 der Laserstrahlen projizierten Lichtmusters 4,
- Auswerten des Lichtmusters 4, wobei das Auswerten unter Berücksichtigung der Strahlwinkeländerungen der Strahlwinkel der zweiten Teilmenge 18 der Laserstrahlen anhand des ermittelten Strahlwinkelwerts erfolgt.

Eine Anordnung zur Durchführung des Verfahrens gemäß Figur 2 weist eine erste Sensoranordnung 10 zum Ermitteln des Strahlwinkelwerts aus dem mindestens einen Strahlwinkel der ersten Teilmenge 17 der Laserstrahlen, eine zweite Sensoranordnung 16 zum Erfassen des durch die zweite Teilmenge 18 der Laserstrahlen projizierten Lichtmusters 4 und eine Verarbeitungsvorrichtung 15 zum Auswerten des Lichtmusters 4 unter Berücksichtigung der Strahlwinkeländerungen der Strahlwinkel der zweiten Teilmenge 18 der Laserstrahlen anhand des ermittelten Strahlwinkelwerts.

Die in der Figur 1 dargestellte Vermessungsanordnung umfasst eine Erfassungsvorrichtung 1 mit der zweiten Sensoranordnung 16 zum Erfassen des durch die zweite Teilmenge 18 der Laserstrahlen projizierten Lichtmusters 4, beispielsweise mit optischen Sensoren, welche das projizierte Lichtmuster 4 erfassen oder ein Abbild des Lichtmusters 4 aufnehmen. Die Erfassungsvorrichtung 1 weist einen Sichtbereich 2 auf, der in der vorliegenden Darstellung perspektivisch zu erkennen ist. Der Sichtbereich 2 der Erfassungsvorrichtung 1 ist durch strichpunktierte Linien angedeutet. Der Sichtbereich 2 der Erfassungsvorrichtung 1 fächert sich in Richtung einer Erstreckungsachse X auf und in geringerem Maße in Transportrichtung T quer zur Erstreckungsachse X. Die Vermessungsanordnung umfasst ferner eine Beleuchtung 3, die das Lichtmuster 4 in Richtung einer Referenzebene 5 projiziert. Die Referenzebene 5 wird hier durch eine Oberfläche eines Förderbandes 6 definiert. Das Förderband 6 ist in Transportrichtung T angetrieben. Auf dem Förderband 6 wird ein Objekt 7, beispielsweise in Form eines Pakets in Transportrichtung T bewegt.

Die Beleuchtung 3 projiziert mit der zweiten Teilmenge 18 der Laserstrahlen in einem Projektionsbereich 8 das Lichtmuster 4 auf das Förderband 6 und das Objekt 7, wobei das Lichtmuster 4 in Richtung der Erstreckungsachse X streifenförmig ausgebildet sein kann. Der Projektionsbereich 8 ist durch gestrichelte Linien angedeutet. Das Objekt 7 wird durch den Projektionsbereich 8 und durch den Sichtbereich 2 hindurch gefördert. In dem Bereich, in dem das Objekt 7 durch den Projektionsbereich 8 hindurch gefördert wird, sind der Projektionsbereich 8 und der Sichtbereich 2 koplanar bzw. überschneidend zueinander angeordnet. Dies bedeutet, dass die Erfassungsvorrichtung 1 stets in dem Bereich, in dem das Objekt 7 durch den Projektionsbereich 8 hindurch gefördert wird, das auf das Objekt 7 projizierte Lichtmuster 4 erfassen kann. Hierbei ist der Sichtbereich 2 in Transportrichtung T mindestens ebenso weit aufgefächert wie der Projektionsbereich 6. Somit befindet sich das Lichtmuster 4 stets im Sichtbereich 2 der Erfassungsvorrichtung 1.

In der Figur 2 ist eine schematische Darstellung der Anordnung zur Kompensation von Strahlwinkeländerungen des durch das diffraktive optische Element 9 erzeugten Strahlenbündels 12 von Laserstrahlen dargestellt, welche der Beleuchtung 3 in Figur 1 zugeordnet ist.

Eine Lichtquelle 14 emittiert einen Eingangslaserstrahl 11 auf das diffraktive optische Element 9, nachfolgend auch kurz als DOE 9 bezeichnet, gegebenenfalls über Ablenkelemente, wie z. B. Spiegel. Durch das DOE 9 wird der Eingangslaserstrahl 11 aufgefächert, wodurch das Lichtmuster 4 gebildet wird. Bei Durchtritt des Laserstrahls 11 durch das DOE 9 wird der Strahl durch Interferenz in das Strahlbündel 12 aufgespalten. Jeder Laserstrahl des Strahlenbündels 12 wird um einen individuellen Strahlwinkel Ai gegenüber dem Eingangslaserstrahl 11 abgelenkt. Die Strahlwinkel Ai sind durch Parameter des DOE 9 und die Wellenlänge des einfallenden Lichts des Eingangslaserstrahls 11 definiert. Ist der Öffnungswinkel Ai eines beliebigen Laserstrahls aus dem Strahlenbündel 12 bekannt, lässt sich eine Korrektur der Strahlwinkel auch für alle anderen Laserstrahlen des Strahlenbündels 12 durchführen.

Die Laserstrahlen des Strahlenbündels 12 werden unterschieden in die erste Teilmenge 17 der Laserstrahlen und die zweite Teilmenge 18 der Laserstrahlen. Die erste Sensoranordnung 10 zum Ermitteln des Strahlwinkelwerts aus mindestens einem der Strahlwinkel der ersten Teilmenge 17 der Laserstrahlen ist der Beleuchtung 3 zugeordnet.

Die Laserstrahlen der ersten Teilmenge 17 verlassen die Beleuchtung 3 in diesem Fall nicht, sondern nur die Laserstrahlen der zweiten Teilmenge 18, die das Lichtmuster 4 projizieren. Die zweite Sensoranordnung 16 zum Erfassen des durch die zweite Teilmenge 18 der Laserstrahlen projizierten Lichtmusters 4 ist der Erfassungsvorrichtung 1 (Figur 1) zugeordnet. Eine Verarbeitungsvorrichtung 15 ist zum Auswerten des Lichtmusters 4 unter Berücksichtigung der Strahlwinkeländerungen der Strahlwinkel der zweiten Teilmenge 18 der Laserstrahlen anhand des ermittelten Strahlwinkelwerts der ersten Teilmenge 17 der Laserstrahlen vorgesehen. Zur Übergabe des ermittelten Strahlwinkelwerts der ersten Teilmenge 17 der Laserstrahlen von der ersten Sensoranordnung 10 an die Verarbeitungsvorrichtung 15 besteht eine durch die unterbrochene Linie schematisch dargestellte Verbindung. Die Verarbeitungsvorrichtung 15 selbst kann alternativ auch der Erfassungsvorrichtung 1 oder der Beleuchtung 3 zugeordnet sein oder weder der Erfassungsvorrichtung 1 noch der Beleuchtung 3 zugeordnet sein. Die erste Sensoranordnung 10 weist beispielsweise mindestens einen optischen Positionssensor, insbesondere mindestens einen positionsempfindlichen Detektor auf. Im dargestellten Ausführungsbeispiel weist die erste Sensoranordnung 10 zwei räumlich getrennte positionsempfindliche Detektoren auf. Der Strahlwinkelwert wird so anhand von zwei Laserstrahlgruppen 17a, 17b der ersten Teilmenge 17 ermittelt, wobei die Strahlwinkel der Laserstrahlen der zwei Laserstrahlgruppen 17a, 17b mit den zwei räumlich getrennten optischen Positionssensoren der ersten Sensoranordnung 10 detektiert werden. Die erste Teilmenge 17 kann somit mehr als einen Laserstrahl umfassen. Weiterhin kann jede der zwei Laserstrahlgruppen 17a, 17b mindestens zwei Laserstrahlen umfassen, die beispielsweise in einer Raumrichtung denselben Strahlwinkel aufweisen und so vorteilhaft durch ein und denselben optischen Positionssensor der ersten Sensoranordnung 10 detektiert werden können. Der mindestens eine optische Positionssensor der ersten Sensoranordnung 10 ist räumlich derart positioniert, dass jeder von dem optischen Positionssensor erfasste Laserstrahl der erste Teilmenge 17 in einer ersten von zwei Raumrichtungen bei einer Wellenlängenänderung des Laserstrahls eine wesentlich größere Änderung des Strahlwinkels erfährt als in der zweiten der zwei Raumrichtungen. So braucht der optische Positionssensor die Position des Laserstrahls vorteilhaft nur in einer Richtung zu erfassen. Mit den optischen Positionssensoren der ersten Sensoranordnung 10 werden die Modensprünge und weiterhin die Temperaturdrifts innerhalb eines Modenplateaus der Laserlichtquelle 14 anhand der erfassten Laserstrahlen der ersten Teilmenge 17 detektiert.

Das Verfahren wird nachfolgend mit Bezug auf die Figuren 1 bis 3 gemeinsam näher erläutert. Die zweite Teilmenge 18 der durch das DOE 9 erzeugten Laserstrahlen bilden das Lichtmuster 4 aus beispielsweise 901 Laserstrahlen, das auf die Objekte 7 projiziert wird, um eine dreidimensionale Vermessung einer Objektoberfläche des Objekts 7 zu ermöglichen, z. B. in der Paketsortierung, wenn die Objekte 7 bzw. Pakete 7 über das Förderband 6 bewegt werden. Hierbei wird mit Hilfe einer Laser-Triangulation, wobei die Laser-Beleuchtung 3 versetzt zu der Erfassungsvorrichtung 1 angeordnet ist, der Höhenverlauf des Objekts 7 bestimmt. Die projizierten Lichtmuster 4 aus Laserpunkten wird durch die zweite Sensoranordnung 16 erfasst und die Position der Laserpunkte kontinuierlich bei jeder Erfassung bzw. in jedem Bild analysiert. Näheres hierzu ist in Druckschrift EP 2 728 305 A1 beschrieben. Das Prinzip der Lasertriangulation erfordert, dass die Strahlwinkel Ai der Laserstrahlen der zweite Teilmenge 18 möglichst zu jeder Zeit bzw. während jeder Erfassung oder Bildaufnahme genau bekannt sind, da sie für die Abstandsberechnung des zu messenden Objekts 7 grundlegend sind. Zu diesem Zweck wird vor der Anwendung in einem Kalibrierschritt eine hoch genauer Datensatz, beispielsweise als Lookup-Tabelle (LUT), aller Strahlwinkel erzeugt (Strahl-LUT). Wenn eine schnelle Datenverarbeitung von untergeordneter Bedeutung ist, können die Strahlinformationen auch in anderen Parameterdatensätzen abgelegt werden. Betrachtet man exemplarisch nur eine Raumrichtung bei der Ablenkung der Laserstrahlen, so gilt für alle Strahlwinkel:

$$\sin(Ai) = \lambda * ki,$$

wobei ki die Raumfrequenzen repräsentieren, die in die Oberflächenstruktur des DOE 9 eincodiert sind und λ die Wellenlänge des emittierten Laserlichts. Ändert sich nun die Wellenlänge λ des einfallenden Lichts, so ändert sich entsprechend der Strahlwinkel jedes austretenden Laserstrahls des Strahlenbündels 12, ggf. mit Ausnahme eines zentralen Laserstrahls, der nicht abgelenkt wird. Der Strahlwinkel Ai jedes abgelenkten Laserstrahls des Strahlenbündels 12 lässt so auf die Wellenlängenänderung und durch die bekannten DOE-Parameter ki auf die Winkeländerung aller anderen austretenden Laserstrahlen schließen. Daher muss nur der Strahlwinkelwert aus mindestens einem Strahlwinkel der ersten Teilmenge 17 der Laserstrahlen detektiert werden, um die wellenlängenbedingte Strahlwinkeländerung der von dem DOE 9 generierten Laserstrahlen der zweiten Teilmenge 18 der Laserstrahlen zu kennen. Dies wird dann bei dem Auswerten des Lichtmusters 4 verwendet, wobei das Auswerten unter Berücksichtigung der Strahlwinkeländerungen der Strahlwinkel der zweiten Teilmenge 18 der Laserstrahlen anhand des ermittelten Strahlwinkelwerts erfolgt, indem beispielsweise die abgelegte Strahlwinkel-LUT um die aktuelle Strahlwinkeländerung korrigiert wird.

Zu diesem Zweck ist das DOE 9 beispielsweise derart gestaltet, dass unterhalb des Lichtmusters 4 zur dreidimensionalen Vermessung des Objektes 7 die zwei Laserstrahlgruppen 17a, 17b unterhalb des Lichtmusters projiziert werden, die zum Messen der Strahlwinkel der Laserstrahlen der ersten Teilmenge 17 dienen. Diese zwei Laserstrahlgruppen 17a, 17b werden jeweils auf einen der optischen Positionssensoren der ersten Sensoranordnung 10 projiziert oder dorthin abgelenkt. Als Ablenkelement können z. B. hier nicht dargestellte Spiegel verwendet werden. Jede der Laserstrahlgruppen 17a, 17b besteht beispielsweise aus drei sehr dicht aneinander liegenden Laserstrahlen. Als optische Positionssensoren werden beispielsweise positionsempfindliche Detektoren (PSD) der ersten Sensoranordnung 10 eingesetzt. Alternativ können auch Zeilen- oder Matrixbildsensoren verwendet werden. Im Folgenden wird stellvertretend für alle anwendbaren Sensortypen auch die Abkürzung PSD verwendet. Die grundlegende Funktionalität wird bereits mit nur einer Laserstrahlgruppe 17a und nur einem PSD zur Detektion des Strahlwinkels erreicht. Verwendet man zwei Laserstrahlgruppen 17a, 17b, deren Strahlwinkel Ai unterschiedliche Vorzeichen tragen, die also gegenläufig von der Richtung des einfallenden Laserstrahls 11 aus abgelenkt werden, ergibt sich ein weiterer Vorteil. Werden zwei Laserstrahlgruppen 17a, 17b nach gleicher optischer Weglänge von den zwei Positionssensoren der ersten Sensoranordnung 10 detektiert, so wird im Falle einer rein wellenlängenbedingten Änderung der Strahlwinkel Ai eine im Absolutwert identische, im Vorzeichen aber entgegengesetzte Änderung registriert. Wird der Strahlwinkel Ai darüber hinaus durch weitere Effekte, wie Beampointing oder mechanische Dejustage der Laserlichtquelle 14 oder ggf. von Ablenkoptiken vor dem Durchtritt durch das DOE 9 beeinträchtigt, so werden diese Änderungen auf beiden PSDs der ersten Sensoranordnung 10 in Größe und Bewegungsrichtung identisch wahrgenommen. So kann vorteilhaft zwischen dem Einfluss der Wellenlänge und anderen Einflüssen unterschieden werden. Sind weitere Effekte neben dem Einfluss der Wellenlängenänderung als klein anzunehmen, können schon mit einem Laserstrahl der ersten Teilmenge 17 und einem PSD der ersten Sensoranordnung 10 die nötigen Messwerte für die Korrektur der Strahl-LUT aufgenommen werden. Die von den PSDs der ersten Sensoranordnung 10 aufgenommenen Laserpunktbewegungen werden über die bekannte Geometrie des Aufbaus in Strahlwinkeländerungen umgerechnet. Der Strahlwinkelwert repräsentiert den sich aus den Strahlwinkeländerungen ergebenden Strahlwinkel. Der Begriff Strahlwinkelwert dient zur Abgrenzung von dem Strahlwinkel Ai eines einzelnen Laserstrahls. Aus der Strahlwinkeländerung lässt sich aus Formel 1 die zugrundeliegende Wellenlängenänderung $\Delta\lambda$ ermitteln, über die wiederum die Änderung aller Strahlwinkel Ai berechnet werden kann. Mit der Information über die Strahlenwinkeländerung aller Laserstrahlen der zweiten Teilmenge 18 kann vor Verarbeitung jedes Lichtmusters 4 die Strahl-LUT softwareseitig aktualisiert werden. Mit dieser aktualisierten Strahl-LUT kann dann die Lasertriangulation, um den Störeffekt der Wellenlängenänderung (und ggf. anderer Effekte) bereinigt, durchgeführt werden. Strahlenwinkeländerungen, die durch Wellenlängenänderungen im Subnanometerbereich verursacht werden, können so registriert werden, beispielsweise mit einer Auflösung von weniger als 0,5 Nanometer, insbesondere von etwa 0,2 Nanometer. Zur Bestimmung einer Wellenlänge der Laserstrahlen, kann die beschriebene Anordnung nach vorheriger Kalibrierung auch alternativ und oder zusätzlich als eine kostengünstige Wavemeter-Variante eingesetzt werden.

In der Figur 3 ist das projizierte Lichtmuster 4 dargestellt, wobei Spalten des Lichtmusters 4 in Richtung der Erstreckungsachse X ausgebildet sind. Unterhalb des eigentlichen Lichtmusters 4 sind die zwei Laserstrahlgruppen 17a, 17b der ersten Teilmenge 17 dargestellt. Diese weisen jeweils drei Laserstrahlen auf, deren Lichtpunkte als Messpunkte 13 auf den der positionsempfindlichen Detektoren der ersten Sensoranordnung 10 dargestellt sind. Die Messpunkte 13 können beispielsweise senkrecht zu einer Messachse der PSD in Y-Richtung nebeneinander angeordnet sein. Dadurch ist eine einfache und schnelle Montage möglich, da ein genaues Justieren der PSD auf einen einzelnen Laserpunkt entfällt. Die PSD der ersten Sensoranordnung 10 werden so ausgerichtet, dass nur eine Messung entlang der X-Achse, also einer eindimensionalen Bewegung der durch die Wellenlängenänderung hervorgerufenen Strahlwinkeländerung erfolgt. Die Kompensation der Strahl-LUT der Strahlwinkel Ai wird mit einem Computerprogramm der Verarbeitungsvorrichtung 15 zum Auswerten des Lichtmusters 4 vorgenommen, indem die Daten des Datensatzes bei einer Abweichung des ermittelten Strahlwinkelwerts von einem Referenzwert in Abhängigkeit von einer Differenz zwischen dem Referenzwert und dem ermittelten Strahlwinkelwert angepasst werden.

Bezugszeichenliste

| | |
|---|---|
| 1 | Erfassungsvorrichtung |
| 2 | Erfassungsbereich |
| 3 | Beleuchtung |
| 4 | Lichtmuster |
| 5 | Referenzebene |
| 6 | Förderband |
| 7 | Objekt |
| 8 | Projektionsbereich |
| 9 | Diffraktives optisches Element, DOE |
| 10 | Erste Sensoranordnung |
| 11 | Eingangslaserstrahl |
| 12 | Strahlenbündel |
| 13 | Messpunkte |
| 14 | Laserlichtquelle |
| 15 | Verarbeitungsvorrichtung |
| 16 | Zweite Sensoranordnung |
| 17 | Erste Teilmenge der Laserstrahlen |
| 17a, 17b | Laserstrahlgruppen |
| 18 | Zweite Teilmenge der Laserstrahlen |
| | |
| X | Erstreckungsachse |
| Y | Längsachse |

T     Transportrichtung
Ai    Strahlwinkel

**Patentansprüche**

1. Verfahren zur Kompensation von Strahlwinkeländerungen eines durch ein diffraktives optisches Element (9) erzeugten Strahlenbündels (12) von Laserstrahlen mit jeweiligen Strahlwinkeln, mit den Schritten:

   - Ermitteln eines Strahlwinkelwerts aus mindestens einem Strahlwinkel einer ersten Teilmenge (17) der Laserstrahlen,
   - Erfassen eines mit einer zweiten Teilmenge (18) der Laserstrahlen projizierten Lichtmusters (4),
   - Auswerten des Lichtmusters, wobei das Auswerten unter Berücksichtigung der Strahlwinkeländerungen der Strahlwinkel der zweiten Teilmenge der Laserstrahlen anhand des ermittelten Strahlwinkelwerts erfolgt,

   **dadurch gekennzeichnet,**
   **dass** der Strahlwinkelwert mit einer ersten Sensoranordnung (10) ermittelt wird, wobei die ersten Sensoranordnung einer Beleuchtung (3) zugeordnet ist, in der das Strahlenbündel (12) von Laserstrahlen erzeugt wird, und wobei nur die zweite Teilmenge (18) der Laserstrahlen zum Projizieren der Lichtmuster (4) die Beleuchtung (3) verlässt.

2. Verfahren nach Anspruch 1, **dadurch gekennzeichnet, dass** ein Datensatz mit Daten zum Auswerten des Lichtmusters (4) verwendet wird, wobei die Daten in Abhängigkeit von dem ermittelten Strahlwinkelwert angepasst werden.

3. Verfahren nach Anspruch 2, **dadurch gekennzeichnet, dass** die Daten des Datensatzes bei einer Abweichung des ermittelten Strahlwinkelwerts von einem Referenzwert in Abhängigkeit von einer Differenz zwischen dem Referenzwert und dem ermittelten Strahlwinkelwert angepasst werden.

4. Verfahren nach Anspruch 1, **dadurch gekennzeichnet, dass** das erfasste Lichtmuster (4) unter Berücksichtigung des ermittelten Strahlwinkelwerts zu einem korrigierten Lichtmuster verändert wird und das korrigierte Lichtmuster ausgewertet wird.

5. Verfahren nach einem der Ansprüche 1 bis 4, **dadurch gekennzeichnet, dass** der Strahlwinkelwert ermittelt wird, indem der Strahlwinkel mindestens eines Laserstrahls der ersten Teilmenge (17) mit mindestens einem optischen Positionssensor detektiert wird.

6. Verfahren nach einem der Ansprüche 1 bis 5, **dadurch gekennzeichnet, dass** die erste Teilmenge (17) derart ausgewählt wird, dass mindestens ein Laserstrahl der ersten Teilmenge in einer ersten von zwei Raumrichtungen bei einer Wellenlängenänderung des Laserstrahls eine wesentlich größere Änderung des Strahlwinkels erfährt als in der zweiten der zwei Raumrichtungen.

7. Verfahren nach einem der Ansprüche 1 bis 6, **dadurch gekennzeichnet, dass** der Strahlwinkelwert anhand von zwei Laserstrahlgruppen der ersten Teilmenge (17) ermittelt wird, wobei die Strahlwinkel der Laserstrahlen der zwei Laserstrahlgruppen mit zwei räumlich getrennten optischen Positionssensoren detektiert werden.

8. Verfahren nach einem der Ansprüche 5 bis 7, **dadurch gekennzeichnet, dass** die erste Teilmenge mehr als einen Laserstrahl umfasst, wobei mindestens zwei der Laserstrahlen in einer Raumrichtung denselben Strahlwinkel aufweisen und durch ein und denselben optischen Positionssensor detektiert werden.

9. Verfahren nach einem der Ansprüche 5 bis 8, **dadurch gekennzeichnet, dass** die erste Teilmenge (17) der Laserstrahlen mittels einer Umlenkvorrichtung auf den mindestens einen optischen Positionssensor gerichtet wird.

10. Anordnung zur Kompensation von Strahlwinkeländerungen eines durch ein diffraktives optisches Element (9) erzeugten Strahlenbündels von Laserstrahlen mit jeweiligen Strahlwinkeln, aufweisend

    - eine erste Sensoranordnung (10) zum Ermitteln eines Strahlwinkelwerts aus mindestens einem der Strahlwinkel einer ersten Teilmenge (17) der Laserstrahlen,
    - eine zweite Sensoranordnung (16) zum Erfassen eines durch eine zweite Teilmenge (18) der Laserstrahlen projizierten Lichtmusters (4),
    - eine Verarbeitungsvorrichtung (15) zum Auswerten des Lichtmusters (4) unter Berücksichtigung der Strahlwinkeländerungen der Strahlwinkel der zweiten Teilmenge (18) der Laserstrahlen anhand des ermittelten Strahlwinkelwerts,

    **dadurch gekennzeichnet,**
    **dass** die erste Sensoranordnung (10) und das diffraktive optische Element (9) einer Beleuchtung (3) zugeordnet sind, wobei nur die zweite Teilmenge (18) der Laserstrahlen die Beleuchtung (3) zum Projizieren des Lichtmusters (4) verlässt.

11. Anordnung nach Anspruch 10, **dadurch gekenn-**

**zeichnet, dass** die erste Sensoranordnung (10) mindestens einen optischen Positionssensor, insbesondere mindestens einen positionsempfindlichen Detektor aufweist.

12. Anordnung nach Anspruch 11, **dadurch gekennzeichnet, dass** die erste Sensoranordnung (10) zwei räumlich getrennte optische Positionssensoren aufweist, insbesondere zwei positionsempfindliche Detektoren.

13. Anordnung nach einem der Ansprüche 11 oder 12, **dadurch gekennzeichnet, dass** der mindestens eine optische Positionssensor räumlich derart positioniert ist, dass jeder von dem Positionssensor erfasste Laserstrahl der ersten Teilmenge (17) in einer ersten von zwei Raumrichtungen bei einer Wellenlängenänderung des Laserstrahls eine wesentlich größere Änderung des Strahlwinkels erfährt als in der zweiten der zwei Raumrichtungen.

14. Anordnung nach einem der Ansprüche 10 bis 13, **dadurch gekennzeichnet, dass** eine Umlenkvorrichtung zum Umlenken der Laserstrahlen der ersten Teilmenge (17) in Richtung der ersten Sensoranordnung (10) vorgesehen ist.

15. Verwendung einer Anordnung nach einem der Ansprüche 10 bis 14 zur Lasertriangulation, wobei ein Eingangslaserstrahl (11) durch ein diffraktives optisches Element (9) zu einem Strahlenbündel von Laserstrahlen mit jeweiligen Strahlwinkeln aufgefächert wird und eine Strahlwinkeländerung mit einem Verfahren nach einem der Ansprüche 1 bis 9 kompensiert wird.

**Claims**

1. Method for compensating beam angle variation of a beam bundle (12) of laser beams generated by a diffractive optical element (9) with respective beam angles, comprising the steps:

   - determining a beam angle value from at least one beam angle of a first subset (17) of the laser beams,
   - detecting a light pattern (4) projected with a second subset (18) of the laser beams,
   - evaluating the light pattern, wherein the evaluation is performed taking into account the beam angle variation of the beam angles of the second subset of the laser beams on the basis of the determined beam angle value,

   **characterised in**
   **that** the beam angle value is determined using a first sensor arrangement (10), the first sensor arrangement being assigned to an illumination (3) in which the beam bundle (12) of laser beams is generated, only the second subset (18) of the laser beams for projecting the light pattern (4) leaving the illumination (3).

2. Method according to claim 1, **characterized in that** a data set with data is used for evaluating the light pattern (4), wherein the data is adapted in dependence on the determined beam angle value.

3. Method according to claim 2, **characterized in that** the data of the data set is adjusted in case of a deviation of the determined beam angle value from a reference value depending on a difference between the reference value and the determined beam angle value.

4. Method according to claim 1, **characterized in that** the detected light pattern (4) is modified to form a corrected light pattern, taking into account the determined beam angle value, and the corrected light pattern is evaluated.

5. Method according to any one of claims 1 to 4, **characterized in that** the beam angle value is determined by detecting the beam angle of at least one laser beam of the first subset (17) with at least one optical position sensor.

6. The method of any one of claims 1 to 5, **characterized in that** the first subset (17) is selected such that at least one laser beam of the first subset is subjected to a substantially greater change in beam angle in a first of two spatial directions than in the second of the two spatial directions upon a change in wavelength of the laser beam.

7. Method according to any one of claims 1 to 6, **characterized in that** the beam angle value is determined using two laser beam groups of the first subset (17), wherein the beam angles of the laser beams of the two laser beam groups are detected with two spatially separated optical position sensors.

8. A method according to any one of claims 5 to 7, **characterized in that** the first subset comprises more than one laser beam, wherein at least two of the laser beams have the same beam angle in one spatial direction and are detected by one and the same optical position sensor.

9. The method according to any one of claims 5 to 8, **characterized in that** the first subset (17) of the laser beams is directed to the at least one optical position sensor by means of a deflection device.

10. Arrangement for compensating beam angle variation of a beam bundle of laser beams generated by a diffractive optical element (9) with respective beam angles, comprising

- a first sensor arrangement (10) for determining a beam angle value from at least one of the beam angles of a first subset (17) of the laser beams,
- a second sensor arrangement (16) for detecting a light pattern (4) projected by a second subset (18) of the laser beams
- a processing device (15) for evaluating the light pattern (4) taking into account the beam angle variation of the beam angles of the second subset (18) of the laser beams on the basis of the determined beam angle value,

**characterized in**
**that** the first sensor arrangement (10) and the diffractive optical element (9) are assigned to an illumination (3), wherein only the second subset (18) of the laser beams leaves the illumination (3) for projecting the light pattern (4).

11. Arrangement according to claim 10, **characterized in that** the first sensor arrangement (10) comprises at least one optical position sensor, in particular at least one position sensitive detector.

12. Arrangement according to claim 11, **characterized in that** the first sensor arrangement (10) comprises two spatially separated optical position sensors, in particular two position sensitive detectors.

13. An arrangement according to any one of claims 11 or 12, **characterized in that** the at least one optical position sensor is spatially positioned such that each laser beam of the first subset (17) detected by the position sensor is subjected to a substantially greater change in beam angle in a first of two spatial directions than in the second of the two spatial directions upon a change in wavelength of the laser beam.

14. An arrangement according to any one of claims 10 to 13, **characterized in that** a deflection device is provided for deflecting the laser beams of the first subset (17) in the direction of the first sensor arrangement (10).

15. Use of an arrangement according to any one of claims 10 to 14 for laser triangulation, wherein an input laser beam (11) is diffracted by a diffractive optical element (9) to form a beam of laser beams having respective beam angles, and a change in beam angle is compensated for by a method according to any one of claims 1 to 9.

## Revendications

1. Procédé, destiné à compenser des variations de l'angle de projection d'un faisceau de rayonnement (12) de rayons laser généré par un élément optique (9) diffractif, comportant les étapes consistant à :

    - déterminer une valeur d'angle de projection à partir d'au moins un angle de projection d'une première quantité partielle (17) des rayons laser,
    - capter un motif lumineux (4) projeté avec une deuxième quantité partielle (18) des rayons laser,
    - évaluer le motif lumineux, l'évaluation s'effectuant sous prise en compte des modifications d'angle de projection des angles de projection de la deuxième quantité partielle des rayons laser à l'aide de la valeur d'angle de projection déterminée,

    **caractérisé en ce que** la valeur d'angle de projection est déterminée à l'aide d'un premier ensemble de capteurs (10), le premier ensemble de capteurs étant affecté à un éclairage (3) dans lequel le faisceau de rayonnement (12) de rayons laser est généré et uniquement la deuxième quantité partielle (18) des rayons laser quittant l'éclairage (3) pour projeter les motifs lumineux (4).

2. Procédé selon la revendication 1, **caractérisé en ce qu'**un jeu de données comprenant des données destinées à évaluer le motif lumineux (4) est utilisé, les données étant adaptées en fonction de la valeur d'angle de projection déterminée.

3. Procédé selon la revendication 2, **caractérisé en ce que** dans le cas d'un écart de la valeur d'angle de projection déterminée par rapport à une valeur de référence, les données du jeu de données sont adaptées en fonction d'une différence entre la valeur de référence et la valeur d'angle de projection déterminée.

4. Procédé selon la revendication 1, **caractérisé en ce que** le motif lumineux (4) capté est modifié en un motif lumineux corrigé, sous prise en compte de la valeur d'angle de projection déterminée et **en ce que** le motif lumineux corrigé est évalué.

5. Procédé selon l'une quelconque des revendications 1 à 4, **caractérisé en ce que** la valeur d'angle de projection est déterminée **en ce que** l'angle de projection d'au moins un rayon laser de la première quantité partielle (17) est déterminé avec au moins un capteur de position optique.

6. Procédé selon l'une quelconque des revendications 1 à 5, **caractérisé en ce que** la première quantité partielle (17) est sélectionnée de telle sorte que lors d'une modification de la longueur d'onde du rayon laser, au moins un rayon laser de la première quantité partielle subisse, dans une première de deux directions spatiales une modification nettement plus importante de l'angle de projection que dans la deuxième des deux directions spatiales.

7. Procédé selon l'une quelconque des revendications 1 à 6, **caractérisé en ce que** la valeur d'angle de projection est déterminée à l'aide de deux groupes de rayons laser de la première quantité partielle (17), les angles de projection des rayons laser des deux groupes de rayons laser étant détectés avec deux capteurs de position optiques séparés dans l'espace.

8. Procédé selon l'une quelconque des revendications 5 à 7, **caractérisé en ce que** la première quantité partielle comprend plus d'un rayon laser, au moins deux des rayons laser présentant le même angle de projection dans une direction spatiale et étant détectés par un seul et même capteur de position optique.

9. Procédé selon l'une quelconque des revendications 5 à 8, **caractérisé en ce que** la première quantité partielle (17) des rayons laser est dirigée au moyen d'un dispositif de renvoi sur l'au moins un capteur de position optique.

10. Ensemble, destiné à compenser des variations d'angle de projection d'un faisceau de rayonnement de rayons laser avec des angles de projection respectifs, généré par un élément optique (9) diffractif, comportant :

   - un premier ensemble de capteurs (10), destiné à déterminer une valeur d'angle de projection à partir d'au moins l'un des angles de projection d'une première quantité partielle (17) des rayons laser,
   - un deuxième ensemble de capteurs (16), destiné à détecter un motif lumineux (4) projeté par une deuxième quantité partielle (18) des rayons laser,
   - un dispositif de traitement (15), destiné à évaluer le motif lumineux (4) sous prise en compte des modifications d'angle de projection des angles de projection de la deuxième quantité partielle (18) des rayons laser, à l'aide de la valeur d'angle de projection déterminée,

   **caractérisé en ce que** le premier ensemble de capteurs (10) et l'élément optique (9) diffractif sont affectés à un éclairage (3), uniquement la deuxième quantité partielle (18) des rayons laser quittant l'éclairage (3) pour projeter le motif lumineux (4).

11. Ensemble selon la revendication 10, **caractérisé en ce que** le premier ensemble de capteurs (10) comporte au moins un capteur de position optique, notamment au moins un détecteur sensible à la position.

12. Ensemble selon la revendication 11, **caractérisé en ce que** le premier ensemble de capteurs (10) comporte deux capteurs de position optiques séparés dans l'espace, notamment deux détecteurs sensibles à la position.

13. Ensemble selon l'une quelconque des revendications 11 ou 12, **caractérisé en ce que** l'au moins un capteur de position optique est positionné dans l'espace de telle sorte que, lors d'une modification de la longueur d'onde du rayon laser, chaque rayon laser de la première quantité partielle (17) capté par le capteur de position subisse, dans une première de deux directions spatiales une modification nettement plus importante de l'angle de projection que dans la deuxième des deux directions spatiales.

14. Ensemble selon l'une quelconque des revendications 10 à 13, **caractérisé en ce qu'**il est prévu un dispositif de renvoi, destiné à renvoyer les rayons laser de la première quantité partielle (17) dans la direction du premier ensemble de capteurs (10).

15. Utilisation d'un ensemble selon l'une quelconque des revendications 10 à 14 pour la triangulation laser, un rayon laser (11) d'entrée étant déployé par un élément optique (9) diffractif en un faisceau de rayonnement de rayons laser avec des angles de projection respectifs et une modification d'angle de projection étant compensée avec un procédé selon l'une quelconque des revendications 1 à 9.

Fig. 1

Fig. 2

Fig. 3

EP 4 080 161 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4737798 A
- EP 20180153
- EP 2728305 A1